(19) Europäisches Patentamt
European Patent Office
Office européen des brevets

(11) **EP 3 264 865 A1**

(12) **EUROPEAN PATENT APPLICATION**

(43) Date of publication:
**03.01.2018 Bulletin 2018/01**

(51) Int Cl.:
***H05B 37/02*** *(2006.01)* ***F21S 8/08*** *(2006.01)*

(21) Application number: **16200572.2**

(22) Date of filing: **24.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.06.2016 KR 20160081708**

(71) Applicant: **LG Electronics Inc.**
**Seoul 07336 (KR)**

(72) Inventors:
• **NOH, Seunghyup**
**Seoul 08592 (KR)**
• **KIM, Sangman**
**Seoul 08592 (KR)**
• **HONG, Jaepyo**
**Seoul 08592 (KR)**

(74) Representative: **Vossius & Partner**
**Patentanwälte Rechtsanwälte mbB**
**Siebertstrasse 3**
**81675 München (DE)**

Remarks:
Amended claims in accordance with Rule 137(2) EPC.

(54) **METHOD OF CONTROLLING OUTDOOR LIGHTING AND DEVICE IMPLEMENTING THEREOF**

(57) The present invention relates to a method of controlling outdoor lighting and a device for implementing the same. According to an embodiment, the method includes storing one or more pieces of On/Off time information about the outdoor lighting in a storage unit of a control device for controlling the outdoor lighting, a prediction unit of the control device generating a predicted On/Off time value for the outdoor lighting by using the stored On/Off time information, a controller of the control device generating a dimming schedule by applying the predicted On/Off time value generated by the prediction unit and a dimming base schedule stored in the storage unit, and the controller of the control device controlling dimming of the outdoor lighting based on the dimming schedule.

FIG. 7

## Description

The present invention relates to a method of controlling brightness of outdoor lighting and a device for implementing the same.

Outdoor lighting fixtures positioned outdoors may be operated according to control of a user or be automatically turned on and off. Brightness of outdoor lighting may vary according to a natural cause such as external light from, for example, the sun and the moon and an artificial cause according to the amount of traffic. However, controlling outdoor lighting which changes every time according to the natural causes and artificial causes has temporal limits. Further, controlling multiple outdoor lighting fixtures disposed in a wide area at a time raises an efficiency issue.

Accordingly, in the present disclosure, a method of adjusting brightness of outdoor lighting taking into account various causes and a device for implementing the same will be discussed.

An object of the present invention devised to solve the problem lies in a method of controlling outdoor lighting and a control device for the same.

It is another object of the present invention to provide a method of controlling lighting using a time ratio of a schedule profile, which is stored in a control device during mass production of control devices, according to a power switching state of outdoor lighting fixtures and a control device for the same.

It is another object of the present invention to provide a method of maximizing the energy saving rate by predicting times for outdoor lighting control on the next day and facilitating maintenance operation through notification when outdoor lighting is abnormal, and a control device for the same.

It should be noted that objects of the present invention are not limited to the aforementioned object, and other objects of the present invention will be apparent to those skilled in the art from the following descriptions. The objects and advantages of the present invention can be implemented by means set forth in the appended claims and the combination thereof.

In accordance with one aspect of the present invention, a method of controlling outdoor lighting includes storing one or more pieces of On/Off time information about the outdoor lighting in a storage unit of a control device for controlling the outdoor lighting, generating a predicted On/Off time value for the outdoor lighting by using the stored On/Off time information and by a prediction unit of the control device, generating a dimming schedule by a controller of the control device and by applying the predicted On/Off time value generated by the prediction unit and a dimming base schedule stored in the storage unit, and controlling dimming of the outdoor lighting based on the dimming schedule by the controller of the control device.

In accordance with another aspect of the present invention, a control device for controlling outdoor lighting includes a storage unit for storing one or more pieces of On/Off time information about the outdoor lighting, a dimming base schedule and a dimming schedule, a prediction unit for generating a predicted On/Off time value for the outdoor lighting by using the stored On/Off time information, and a controller for generating a dimming schedule by applying the predicted On/Off time value generated by the prediction unit and a dimming base schedule stored in the storage unit and for controlling dimming of the outdoor lighting based on the dimming schedule.

According to an embodiment of the present invention, outdoor lighting may be automatically controlled by implementing a method of controlling dimming of outdoor lighting and a control device for the same.

According to an embodiment of the present invention, a schedule profile may be stored in control devices during mass production of the control devices, and lighting may be controlled using a time ratio of the stored schedule profile according to the power switching state of outdoor lighting fixtures.

According to an embodiment of the present invention, the energy saving rate may be maximized by predicting times for outdoor lighting control on the next day.

In yet another embodiment of the present invention, when operation is abnormal, maintenance may be enabled through an alarm in the form of, for example, flickering of light.

The effects of the present invention are not limited to the aforementioned effects, and various effects of the present invention may be easily derived from configuration of the present invention by those skilled in the art.

## BRIEF DESCRIPTION OF THE DRAWINGS

FIG. 1 illustrates configuration of multiple outdoor lighting fixtures according to an embodiment of the present invention.

FIG. 2 illustrates a dimming base schedule or dimming schedule applicable to outdoor lighting fixtures according to an embodiment of the present invention.

FIG. 3 illustrates configuration of a device for controlling dimming of lighting by predicting an on/off time according to an embodiment of the present invention.

FIG. 4 illustrates a procedure of calculating a predicted on/off time value according to an embodiment of the present invention.

FIG. 5 illustrates a procedure of a control device calculating a dimming schedule based on a dimming base schedule according to an embodiment of the present invention.

FIG. 6 illustrates a procedure of a control device controlling lighting based on a dimming schedule according to an embodiment of the present invention.

FIG. 7 illustrates interaction among a control device for controlling dimming of lighting, a lighting fixture and a cabinet for applying an On signal and Off signal to the control device and the lighting fixture according to an embodiment of the present invention.

FIG. 8 illustrates configuration of a control device according to another embodiment of the present invention.

FIG. 9 illustrates generating a dimming schedule by applying a predicted On/Off time value and a dimming base schedule according to an embodiment of the present invention.

FIG. 10 illustrates generating a dimming schedule by applying a predicted On/Off time value and a dimming base schedule according to another embodiment of the present invention.

FIG. 11 illustrates configuration of a control device according to another embodiment of the present invention.

FIG. 12 illustrates a procedure of a control device correcting a dimming base schedule according to an embodiment of the present invention.

FIG. 13 illustrates an error correction procedure according to an embodiment of the present invention.

FIG. 14 illustrates a combination of a control device including an external light sensor and an outdoor lighting fixture according to an embodiment of the present invention.

## DETAILED DESCRIPTION

Hereinafter, embodiments of the present invention will be described in detail with reference to the accompanying drawings such that those skilled in the art can easily practice the present invention. The present invention can be implemented in various different forms, and is not limited to the embodiments described herein below.

For the purpose of clarity, aspects that are irrelevant have been eliminated, and the same reference numbers will be used throughout the specification to refer to the same or like parts. Some embodiments of the present invention will be described in detail with reference to exemplary drawings. In assigning reference numbers to elements in the respective drawings, the same elements shown in different drawings may have the same reference numbers. In describing the present invention, detailed descriptions of well-known functions and constructions may be omitted to avoid obscuring the main points of the present invention.

In describing elements of the present invention, terms such as "first," "second," "A," "B," "(a)," and "(b)" may be used. These terms are used only for the purpose of distinguishing one element from another, and are not intended to limit the nature, order, sequence or number of the elements. It will be also understood that when an element is referred to as being "connected" to, "coupled" with, or "contacting" another element, it can be directly connected to, coupled with or contacting the other element or "intervening" elements may also be present, or elements may be "connected" to, "coupled" with, or "contacting" each other via another element.

In describing the present invention, elements may be subdivided for simplicity, but they may be implemented in one device or module, or one element may be divided into parts implemented in multiple devices or modules.

In the present disclosure, a method of controlling brightness and On/Off of one or more lighting fixtures disposed in an outdoor space and a device for implementing the same will be discussed.

Outdoor lighting fixtures may be individually controlled or controlled group by group. On/Off and brightness of lighting fixtures, i.e., a dimming schedule for the lighting fixtures may also be controlled individually or controlled group by group.

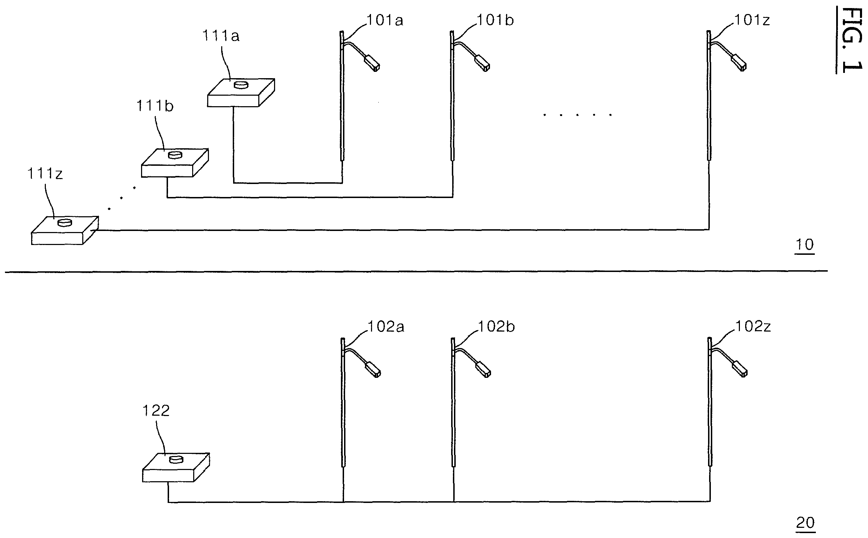

FIG 1 illustrates configuration of multiple outdoor lighting fixtures according to an embodiment of the present invention. The part 10 of FIG 1 shows an example of configuration of individual control devices corresponding to outdoor lighting fixtures, respectively, and the part 20 of FIG 1 shows an example of configuration of one control device corresponding to a group of multiple outdoor lighting fixtures. More specifically, in the part 10, On/Off and dimming of each outdoor lighting fixture 101a, 101b, ..., 101z is controlled by each control device 111a, 111b, ..., 111z.

In the part 20, one control device 122 controls On/Off and dimming of the multiple outdoor lighting fixtures 111a, 111b, ..., 111z.

The control devices shown in the part 10 of FIG. 1 may be disposed a long distance from the outdoor lighting fixtures or be disposed close to the outdoor lighting fixtures. The control devices may be integrally coupled with the corresponding outdoor lighting fixtures. The control devices may be disposed in a cabinet (or distribution cabinet) for applying or interrupting power to the outdoor lighting fixtures or may be integrally coupled with the cabinet. Accordingly, the control devices of the present invention may correspond to devices coupled to either the outdoor lighting fixtures or the cabinet. The control devices of the present invention may be outdoor lighting fixtures having a dimming control function or correspond to a cabinet having the dimming control function.

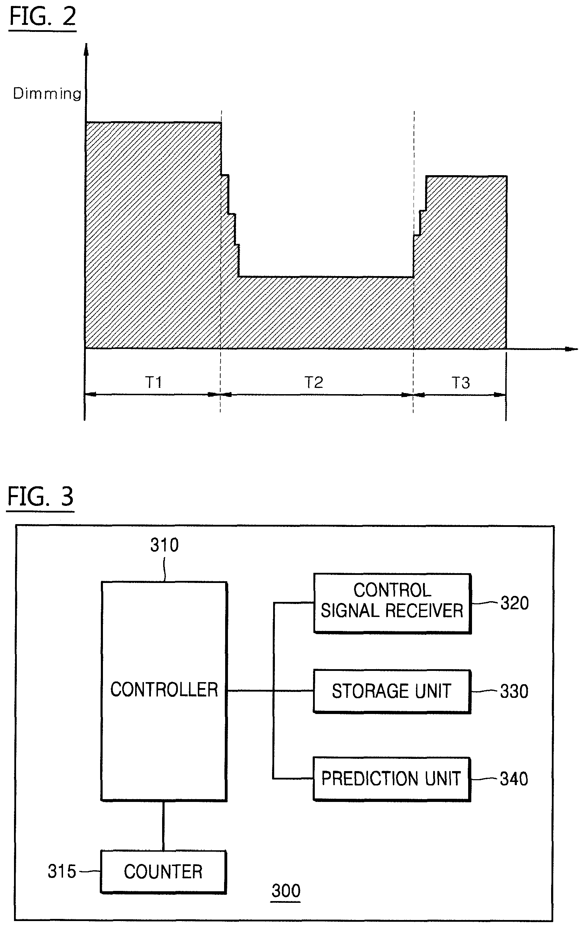

In FIG. 1, the control devices 111a, 111b, ..., 111z, 122 include a specific schedule for controlling dimming. In one embodiment of the present invention, a schedule included in the control devices 111a, 111b, ..., 111z, 122 is shown in FIG. 2.

FIG. 2 illustrates a dimming base schedule or dimming schedule applicable to outdoor lighting fixtures according to an embodiment of the present invention. When X axis denotes time, and Y axis denotes intensity of light according to dimming, the entire dimming base schedule or dimming schedule is configured such that dimming is adjusted in a manner that the light is set to 100% of the full intensity in interval T1, then dimmed down to 35% of the full intensity in interval T2, and set to 85% of the full intensity in interval T3. In interval T1, the high intensity of light is output since the amount of traffic or moving population may be large. In interval T2, the amount of moving population is small, and thus a low intensity of light is output. In interval T3, which is around early hours, there is natural light generated from the outside, and thus the light may be dimmed down to 85% of the full intensity.

The schedule of FIG 2 may adjust the degree of dimming for a certain interval with respect to a time at which the entire lighting fixtures are turned on. The dimming base schedule refers to a schedule that the control device stores as base information, and the dimming schedule indicates a schedule generated using the dimming base schedule.

In the dimming schedule, the length of time for which lighting fixtures are maintained in an "on" state may form the basis of setting different intensities of light. The lighting fixtures may be automatically turned on/off, or may be turned on/off by an external signal, a sensor, or the like. According to an embodiment of the present invention, the dimming schedule is configured by segmenting the period from the time at which the lighting fixtures are turned on to the time at which the lighting fixtures are turned off, and accordingly the schedule may be applied by calculating a predicted On/Off time in controlling the future On/Off time of the lighting fixtures. Hereinafter, the On/Off time of the lighting fixtures refers to a time length from the time at which the lighting fixtures are turned on to the time at which the lighting fixtures are turned off. This length of time may be compared with an output value of a counter or be used as an input value to the counter in the procedure of controlling dimming of the lighting fixtures.

Hereinafter, the dimming schedule and the dimming base schedule will be discussed in more detail. The dimming base schedule refers to a schedule including information for controlling dimming of light according to a certain ratio or a certain time interval within the entire time. For example, the dimming base schedule may be configured such that dimming varies within a time period during which the lighting fixtures are turned on, as shown in Table 1 below.

TABLE 1

|  | Start_Ratio | End Ratio | DimmingRate |
| --- | --- | --- | --- |
| T1 | 0 | 30 | 100 |
| T2 | 30 | 70 | 35 |
| T3 | 70 | 100 | 85 |

In Table 1, Start_Ratio and End_Ratio define time intervals based on ratios. For example, referring to FIG. 2, when the On/Off time period of the lighting fixtures is defined as 100, T1 corresponds to a schedule having Start_Ratio set to 0 and End_Ratio set to 30, and indicates that the light is adjusted to 100% of the full intensity for the first 30% of the time period.

T2 corresponds to a schedule having Start_Ratio set to 30 and End_Ratio set to 70, and indicates that the light is dimmed down to 35% of the full intensity for the middle time interval corresponding to 40% of the time period. T3 corresponds to a schedule having Start_Ratio set to 70 and End_Ratio set to 100, and indicates that dimming is performed to adjust the light to 85% of the full intensity of light for the last time interval corresponding to 30% of the time period. Accordingly, when the On/Off time period of the lighting fixtures is 10 hours, dimming of light may be controlled such that the light is adjusted to 100% of the full intensity for the first 3 hours, to 35% of the full intensity for the middle interval of four hours, and to 85% for the last three hours. Accordingly, the dimming base schedule serves as reference data that is applied in proportion to the length of the On/Off time period.

Accordingly, using the dimming base schedule and a time interval for which the lighting fixtures are expected to be turned on, i.e., a predicted On/Off time value for the lighting fixtures, a dimming schedule for the lighting fixtures may be generated. In this case, the predicted On/Off time value may be calculated using the environment where the lighting fixtures are disposed, the On/Off history of lighting conducted in the area where the lighting fixtures are disposed, and the like.

In contrast with Table 1, the dimming schedule may be configured by certain time intervals. The dimming base schedule may be configured with the following data structure called DimmingBaseSchedule.

```
DimmingBaseSchedule {
FirstPeriodTime;
LastPeriodTime;
FirstPeriodDimming;
LastPeriodDimming;
MidllePeriodDimming;
}
```

The entire time period is divided into three periods, and FirstPeriodTime and FirstPeriodDimming define a time and dimming rate of the first period. LastPeriodTime and LastPeriodDimming define the time and dimming rate of the third period. MiddlePeriodDimming defines the dimming rate of the middle period. Since the middle period does not require separate time setting, information about time thereof may be omitted.

When DimmingBaseSchedule is used, the dimming base schedule may be configured such that the dimming rate is maintained to be 100 for 3 hours after the lighting fixtures are turned on, to be 85 for four hours before the lighting fixtures are turned off, and to be 35 during the middle time period. In this case, the value of the dimming base schedule may be implemented as follows.

DimmingBaseSchedule DBS;
DBS.FirstPeriodTime = 3;
DBS.LastPeriodTime = 4;
DBS.FirstPeriodDimming = 100;
DBS.LastPeriodDimming = 85;
DBS.MidllePeriodDimming

The dimming base schedule may be implemented or stored as Table 1 or DimmingBaseSchedule in various ways. For example, the time period of the dimming base schedule may be divided into periods with absolute lengths or into periods according to a relative time ratio, or the aforementioned two types of time periods may be combined to set the dimming rate for each time period.

In brief, according to an embodiment of the present invention, the dimming base schedule may include dimming information about each of the two or more divided time periods, and each time period may be defined as an absolute time, for example, 3 hours or 4 hours. Alternatively, the time periods may be defined by a relative ratio. For example, when the entire time is defined as 100, relative proportions such as 30 and 40 may define the time periods.

In the following description, the On/Off time information refers to the length of time from the time the lighting fixtures are turned on to the time the lighting fixtures are turned off. An example of the On/Off time information may be the On/Off time information for the last N days. Alternatively, a database based on the corresponding latitude/longitude/area information may be used as well.

That is, the On/Off time information refers to a previous time period during which the lighting fixtures were turned on/off. For example, if power is applied to the lighting fixtures at 6 p.m. on day X, and then the power is interrupted at 5 a.m. on the next day, Tx indicating the On/Off time information about day X is 11 hours. The time of the On/Off time information may be stored by converting the hours into minutes or seconds. Alternatively, 30 minutes, which is a time unit appropriate for the counter, may be used. For example, when a counter configured to count one per 30 minutes is provided to the control device, the aforementioned time schedule may be configured in units of 30 minutes. In this case, if a time ratio is applied, the ratio may be rounded off/rounded up/rounded down to an integer.

Multiple pieces of On/Off time information may be stored in the storage unit. A predicted On/Off time value is a predicted time indicating how long the lighting fixtures will be maintained in the "on" state before the power applied to the lighting fixtures is interrupted, based on the On/Off time information. This value may be calculated using the previous On/Off time information.

For simplicity, it is assumed that the On/Off time information or the piece of On/Off time information has a certain period according to the properties of the outdoor lighting fixtures. For example, it is assumed that the outdoor lighting fixtures are turned on at night and turned off in the morning every day. However, embodiments of the present invention are not limited thereto. The present invention is applicable to outdoor lighting fixtures which are repeatedly turned on and off. In particular, the present invention is applicable to control of all outdoor lighting fixtures whose On/Off time information changes in every period.

FIG 3 illustrates configuration of a device for controlling dimming of lighting by predicting an On/Off time according to an embodiment of the present invention.

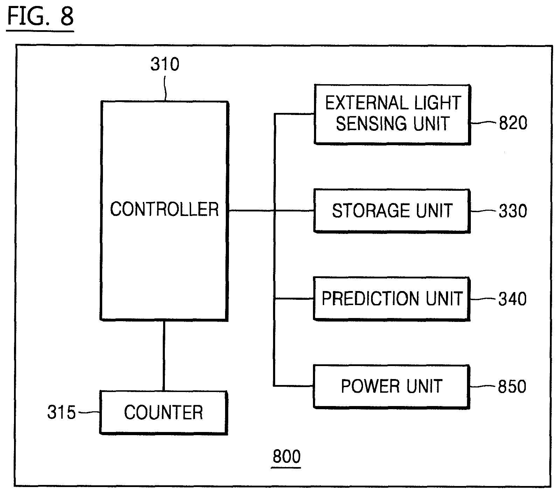

In the embodiment of the control devices 111a, 111b, ..., 111z, 122 of FIG. 1, a device 300 for controlling dimming of outdoor lighting fixtures may include a controller 310, a control signal receiver 320, a storage unit 330, and a prediction unit 340. The controller 310 may control dimming of light using a counter 315. More specifically, the control signal receiver 320 receives an On signal and an Off signal for controlling outdoor lighting. The On signal and Off signal for controlling outdoor lighting may be directly applied to the outdoor lighting fixtures. This case will be described with reference to FIG. 8 later.

The control devices 111a, 111b, ..., 111z, 122 may control dimming of the lighting fixtures or control dimming and On/Off of the lighting fixtures together.

The storage unit 330 stores the On/Off time information about the outdoor lighting fixtures, a dimming base schedule and a dimming schedule. In other words, the storage unit 330 stores one or more pieces of On/Off time information. In addition, the storage unit 330 may store the time information about the On signal and Off signal received by the control signal receiver 320. The dimming schedule may be generated and stored by the controller 310 based on the dimming base schedule each time. The storage unit 330 may store one or more dimming base schedules. If there are two or more dimming schedules, the controller 310 may select one of the dimming base schedules. In addition, the time information stored in the storage unit 330 may be information about the times at which an On signal and an Off signal were previously received with respect to the current time. The stored file format of On/Off time information depends on the property of the storage unit 330. For example, a text file which stores characters and numbers representing the On/Off time information can be the exemplary embodiment of stored On/Off time information.

Further, the storage unit 330 may additionally take into account the latitude and longitude of the corresponding area and environmental factors in storing time information which may be referenced when the lighting fixtures are turned on/off. For example, time information which may be referenced when the lighting fixtures are turned on/off may be stored by dividing one year into certain periods. According to the capacity of the storage unit 330, the storage unit 330 may store time information which may be referenced every month, every week or every day when the lighting fixtures are turned on/off. This information may be stored when the device 300 is shipped out, or may be recorded or selected after installation of the device 300, taking into account the characteristics of the corresponding area.

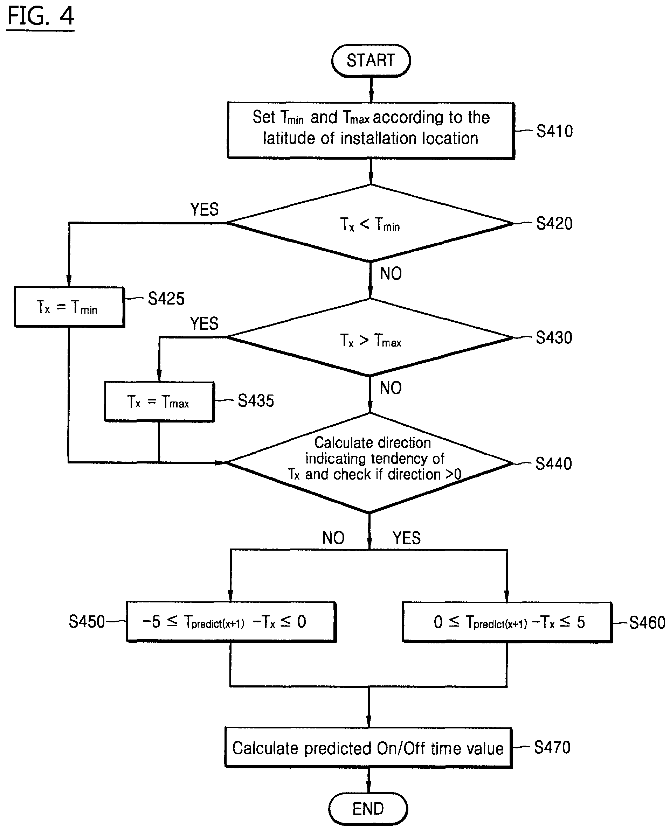

The prediction unit 340 generates predicted On/Off time values for the outdoor lighting fixtures using the On/Off time information stored in the storage unit 330. The predicted On/Off time may be selected in various ways. For example, the predicted On/Off time values may be calculated by extracting only a part of the time information stored in the storage unit 330. Generation of the predicted On/Off time values will be described with reference to FIGS. 4 to 6.

The controller 310 generates a dimming schedule by applying the predicted On/Off time values generated by the prediction unit 340 to the dimming base schedule, and controls dimming of the outdoor lighting fixtures according to the generated dimming schedule.

The control signal receiver 320 receives an On signal notifying that power is applied to the outdoor lighting fixtures or an Off signal notifying that power to the outdoor lighting fixtures has been interrupted, and provides the same to the controller 310. Using the signal, the controller 310 may store On/Off time information in the storage unit. If the controller 310 directly controls On/Off of the lighting fixtures, the lighting fixtures may be turned on and off according to the On/Off signals. To this end, the control device 300 may further include a separate power unit 850, which will be described later. In this case, the power unit 850 applies power to the outdoor lighting fixtures or interrupts the applied power.

When an abnormal state is sensed among elements or the lighting fixtures are left in the "on" state for an excessively long time, the controller 310 may repeat dimming down and brightening up the light to produce a flickering effect such that occurrence of abnormality in lighting can be checked from the outside. For example, in a time interval for which the dimming rate is 35%, dimming of the corresponding lighting fixture may be repeatedly adjusted to 100 and 35 to produce the effect of flickering in the lighting fixture to visually notify that the corresponding lighting fixture is abnormal.

According to the examples of FIGS. 2 and 3, a control device may control dimming of an outdoor lighting fixture in using one or more dimming base schedules. In this case, to apply the dimming base schedules to controlling dimming of the lighting fixture every day, a time period from the time at which the lighting fixture is turned on to the time at which power to the lighting fixture is interrupted needs to be predicted. For example, the dimming base schedule may be differently adjusted depending on whether to keep the lighting fixture on for 10 hours or 8 hours from the evening to the dawn on the next day.

Accordingly, the control device may take into account characteristics of the area where the lighting fixture is located, for example, the geographical characteristics such as the latitude and longitude of the area to calculate the length of a time period for which the lighting fixture emits light from a specific time (for example, on a day-by-day basis) at which power begins to be applied to the lighting fixture. The value obtained through this calculation is called a predicted On/Off predicted time value. The control device changes the dimming base schedule according to the calculated predicted On/Off time value to generate and apply a dimming schedule appropriate for the corresponding date.

FIG. 4 illustrates a procedure of calculating a predicted On/Off time value according to an embodiment of the present invention.

The prediction unit 340 of FIG. 3 described above may calculate a predicted On/Off time value. Specifically, the prediction unit 340 of FIG. 3 extracts K pieces of stored On/Off time information, extracts a time information tendency value from the K pieces of On/Off time information, and generates a predicted On/Off time value in proportion to increase or decrease of the time information tendency value. More details will be described below.

Tmin and Tmax are set according to the latitude of the location where the lighting fixtures are installed (S410). This value may be pre-stored in the storage unit 330.

Tmin is a time value for the shortest period from sunrise to sunset, and Tmax is a time value for the longest period from sunrise to sunset. Accordingly, Ti indicating the value of time at which the lighting fixtures can be turned on on a date i satisfies the criterion of Equation 1 that Ti should be greater than or equal to Tmin and less than or equal to Tmax.

$$\text{Equation 1}$$

$$\text{Tmin} \leq \text{Ti} \leq \text{Tmax}$$

Alternatively, a range now than the range of Equation 1 may be applied. In this case, the time value Ti may be greater than Tmin and less than Tmax.

In FIG. 4, On/Off information about the times on or before day x is used to calculate a predicted On/Off time value for day x+1. Accordingly, to check reliability of the value of Tx, it is checked whether the value of Tx satisfies Equation 1. Tx is the value of time for which the lighting fixture is maintained in the "on" state on day x. That is, Tx indicates the length of time from the time at which the lighting fixture is turned on on day x to the time at which the lighting fixture is turned off.

If Tx is less than Tmin (S420), it is determined that the lighting fixture is exceptionally controlled, and thus Tx is stored as the value of Tmin (S425). If Tx is greater than Tmax (S430), it is determined that the lighting fixture is exceptionally controlled, and thus Tx is stored as the value of Tmax (S435).

Then, it is checked whether the period of time for which the lighting fixture is turned on and off is increased or decreased for a certain time (three days, one week). This is intended to check whether the predicted On/Off time value for day x+1 has increased or decreased from the previous predicted On/Off time value. More specifically, tendency of Tx may be determined by calculating a variable "direction" in Equation 2 below (S440). Equation 2 calculates the "direction" with a pseudo program code. Herein, the "direction" checks whether the predicted On/Off time value has increased from the value for the previous day by comparing the periods of turning on of the lighting fixture over the past k days.

$$
\begin{aligned}
&\text{Equation 2}\\
&\text{direction} = 0;\\
&\text{for } (i = 0 \text{ to } k, i{+}{+})\{\\
&\qquad \text{if } T(x{-}i) > T(x{-}i{-}1)\\
&\qquad\qquad \text{then direction} = \text{direction} + 1;\\
&\qquad\qquad \text{else direction} = \text{direction} {-}1;\\
&\}
\end{aligned}
$$

If the generated "direction" is less than 0, it may be determined that the time from sunrise to sunset tends to decrease, and thus the range of the predicted On/Off time value may be narrowed compared to Tx. For example, a range may be set as shown in S450 and Equation 3.

$$\text{Equation 3}$$

$$-5 \leq \text{Tpredict}(x{+}1) - \text{Tx} \leq 0$$

In Equation 3, Tpredict(x+1) denotes a predicted On/Off time value for day x+1. That is, the predicted On/Off time value for day x+1 is set such that the difference from the On/Off time information about day x is between -5 and 0.

If the "direction" is greater than 0, it may be determined that the time from the sunrise to the sunset tends to increase, and thus the range of the predicted On/Off time value may be widened compared to Tx. For example, the range may be set as shown in S460 and Equation 4.

Equation 4

$$0 \le \text{Tpredict}(x+1) - \text{Tx} \le 5$$

The predicted On/Off time value for day x+1 is set such that the difference from the On/Off time information about day x is between 0 and 5.

Using the On/Off time information about the past n days within the range of S450 and S460, Tpredict(x+1) may be more accurately calculated. In this case, the predicted On/Off time value for day x+1 Tpredict(x+1) may be calculated using the On/Off time information about the past n days and the linear algorithm or Kalman filter.

In particular, in calculating Tpredict(x+1), the calculation accuracy may be enhanced by increasing the weight value for the On/Off time information about a day closest to day x+1.

For example, Tpredict(x+1) may be calculated using various weights a1, a2, ..., an in Equation 5 below.

Equation 5

$$\text{Tpredict}_{(x+1)} = a_1 T_1 + a_1 T_2 + a_2 T_3 + .... + a_n T_x$$

$$T_x = a_1 T_0 + a_2 T_1 + a_3 T_2 + .... + a_n T_{x-1}$$

$$\text{Tpredict}_{(x+1)} - T_x = a_1(T_1 - T_0) + a_2(T_2 - T_1) + a_3(T_3 - T_2) .... + a_n(T_x - T_{x-1})$$

Equation 5 may be applied for a certain time to perform the calculation from a1 to an.

In another embodiment, the Kalman filter algorithm may be used. An estimated value for day x+1 may be calculated using the past On/Off time information as a measured value. To apply the Kalman filter, prediction of a previous estimated value and prediction of a past error covariance may be performed in a prediction step, and an estimated value may be calculated by calculating a Kalman gain to calculate an error covariance. When the measured value Zk is input to Equation 6, an estimated value is output. The prediction step includes prediction of an estimated value and prediction of an error covariance. The estimation step includes calculating the Kalman gain, calculating an estimated value, and calculating an error covariance.

Equation 6

$$\text{Prediction step}\begin{cases} \hat{x}_{\bar{k}} = A\,\hat{x}_{k-1} + B\,u_k \\ P_{\bar{k}} = A P_{k-1} A^T + Q \end{cases}$$

$\hat{x}_k$: Estimated value

$\hat{\ }$ : Estimated value

$$\text{Estimation step}\begin{cases} K_k = P_{\bar{k}} H^T (H P_{\bar{k}} H^T + R)^{-1} \\ \hat{x}_k = \hat{x}_{\bar{k}} + K_k(z_k - H\hat{x}_{\bar{k}}) \\ P_k = P_{\bar{k}} - K_k H P_{\bar{k}} \end{cases}$$

The predicted On/Off time value for day x+1 is calculated using the previously measured On/Off time information using the linear algorithm or Kalman filter (S470).

To summarize FIG. 4, in order to generate a predicted On/Off time value, K pieces of On/Off time information stored in the storage unit is extracted, a time information tendency value may be extracted from the K pieces of On/Off time information (S440), and then a predicted On/Off time value may be generated in proportion to increase or decrease of the time information tendency value (S450, S460, S470).

The K pieces of On/Off time information stored in the storage unit may be set to the maximum value or minimum value in case of an exceptional value as discussed in operations S420 to S435. That is, an allowable range of the On/Off time information may be checked. If a value is not within the range, the predicted On/Off time value may be set to the minimum value or the maximum value and stored in the storage unit. Alternatively, the On/Off time information may be stored and be set to the minimum value or maximum value in calculating a predicted time value.

The predicted time value allows prediction of the length of time for which the outdoor lighting fixture will be maintained in the "on" state. Thereby, an appropriate dimming schedule may be generated to control dimming of the outdoor lighting fixture. In particular, with the predicted time value of the present invention, dimming of the outdoor lighting fixture may be controlled without considering separate seasonal causes in the corresponding area. This is because change of sunrise and sunset which occur every day is reflected in the predicted time value. In addition, the predicted time value may be corrected to include a variable produced by an environmental cause. Accordingly, dimming may be accurately controlled.

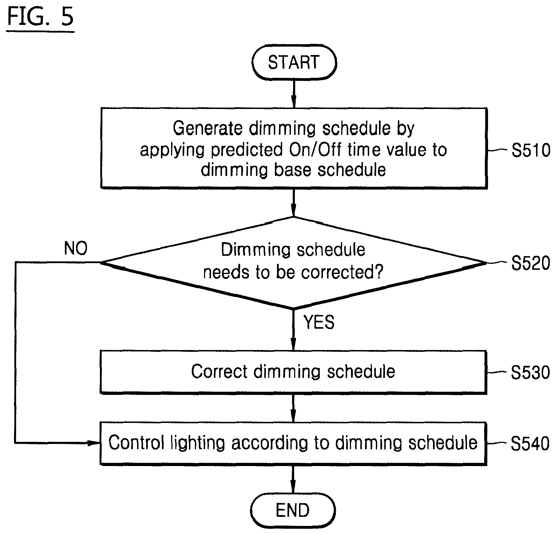

Hereinafter, the procedure of calculating a dimming schedule for the outdoor lighting fixture using a predicted On/Off time value and a dimming base schedule will be discussed in more detail with reference to FIG. 5.

FIG. 5 illustrates a procedure of a control device calculating a dimming schedule based on a dimming base schedule according to an embodiment of the present invention. The control device generates a dimming schedule by applying the predicted On/Off time value to the dimming base schedule (S510). As described above, the dimming base schedule refers the data for adjusting dimming according to time intervals shown in FIG. 2 or Table 1. When calculation of the predicted On/Off time value Tpredict(x+1) yields 480 minutes equivalent to 8 hours, this time value is converted into a value in the scale of 100. Thereby, the dimming base schedule of Table 1 is transformed into a dimming schedule shown below.

TABLE 2

|  | Start_Time | End Time | DimmingRate |
|---|---|---|---|
| T1 | 0 | 144 | 100 |
| T2 | 144 | 336 | 35 |
| T3 | 336 | 480 | 85 |

Start_Time and End_Time are calculated from the dimming base schedule of Table 1. Dimming is set to 100 for the time between 0 minute and 144 minutes (2 hours and 24 minutes), set to 35 for the time from 144 minutes to 336 minutes, and set to 85 for the time from 336 minutes and 480 minutes. To this end, the control device may use a counter. When the time counted by the counter from Start_Time at which the lighting fixture is turned on reaches End_Time, dimming of light is controlled. When the time exceeds 480 minutes, the value of 85, which is the original dimming value, is maintained.

Then, the control device checks if the dimming schedule needs to be corrected (S520). Then, it is check whether the corrected dimming schedule conforms to a certain criterion (e.g., whether the time for which DimmingRate is 100 is excessively short or long). If the dimming schedule needs to be corrected as a result of checking, the dimming schedule is corrected (S530). Then, dimming of the lighting fixtures is controlled according to the dimming schedule (S540).

Herein, as an embodiment of correction of the dimming schedule, if the reference time for which the dimming rate should be maintained to be 100 is 150 minutes, the dimming schedule of Table 2 may be corrected to the dimming schedule of Table 3 below.

TABLE 3

|  | Start_Time | End_Time | DimmingRate |
|---|---|---|---|
| T1 | 0 | **150** | 100 |
| T2 | **150** | 336 | 35 |
| T3 | 336 | 480 | 85 |

To summarize FIG 5, each time period in the dimming base schedule may be defined according to a ratio of the entire time period as shown in Table 1. In this case, the controller 310 of FIG. 3 may calculate a start time and end time corresponding to the ratio of each time period in the dimming base schedule as shown in Table 1. Thereby, a dimming schedule including dimming information corresponding to the calculated times, the start time and end time may be generated as shown in Table 2 or 3. The generated dimming schedule is used to control dimming of the outdoor lighting fixtures on the corresponding day. The controller 310 may generate the dimming schedule as shown in Table 2 or 3 at various times. If the outdoor lighting fixtures are turned off after receiving an Off signal, a dimming schedule corresponding to the next period during which the lighting fixtures will be turned on may be generated. Alternatively, when the control device receives an On signal, the outdoor lighting fixture may be turned on, and the control device may generate a dimming schedule necessary for this period.

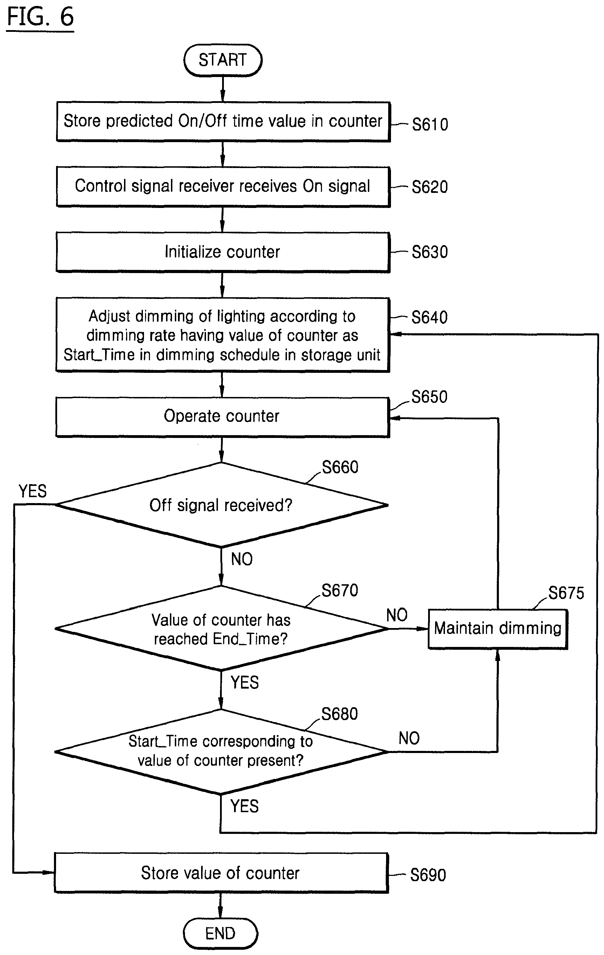

FIG 6 illustrates a procedure of a control device controlling lighting based on a dimming schedule according to an embodiment of the present invention. The dimming schedule adjusts dimming within a certain time interval. To this end, the control device may check the time using the counter 315 of FIG. 3. The dimming schedule generated in the procedure of FIG. 5 is already stored in the storage unit 330. In one embodiment in which the controller 310 controls the counter 315, the counter 315 may be operated according to an On signal for the outdoor lighting fixture, and the controller 310 may control dimming of the outdoor lighting fixture according to the dimming information of the dimming schedule.

The controller 310 of the control device 300 stores a predicted On/Off time value in the counter (S610) Then, the control signal receiver 320 receives an On signal for turning on the lighting fixture (S620). The On signal may be transmitted from a device for applying power to the lighting fixtures. The controller of the control device 300 may or may not directly transmit the received On signal to the lighting fixture.

Upon receiving the On signal, the controller 310 initializes the counter to 0. Thereafter, the controller 310 controls dimming of the lighting fixture according to a diming rate having the value of the counter as Start_Time in the dimming schedule. When Table 3 is employed, the dimming rate of Start_Time is 100 since the counter has been initialized. Then, the counter is operated (S650). The value of the counter may be increased by 1 per minute. Of course, the counter may be implemented in various ways. For example, the value of the counter may be increased by 30 per 30 minutes. In another case, the value of the counter may be increased in accordance with the unit of the dimming schedule.

After operating the counter, the controller 310 checks if an Off signal for interrupting power to the lighting fixture is received (S660). If the Off signal is received, the value counted up to now is stored in storage unit 330 as the actual On/Off time information (S690).

If the Off signal is not received, the controller 310 checks if the value of the counter has reached End_Time (S670). If the value has not reached the End_Time, dimming is maintained at the same level (S675). For example, the operations S650, S660, S670 and S675 are repeated until the value of the counter reaches 150, which is End_Time in the dimming schedule of Table 3.

If the value of the counter reaches End_Time (S670), the controller 310 checks if Start_Time corresponding to the value of the counter is present in the dimming schedule (S680). Referring to Table 3, 150 corresponds to Start_Time, and thus dimming of the lighting fixture is controlled with the corresponding dimming rate of 35 as in the operation S640. The operations S650, S660, S670, and S675 are repeated in a similar manner. Then, when the value of the counter reaches 336, lighting is controlled with the dimming rate of 85.

If the counter reaching End_Time has no value corresponding to Start_Time, for example, if the counter reaches 480 as shown in Table 3, this means that the counter has reached a time previously predicted with a predicted On/Off time as a time for which the lighting fixture is kept turned on. This in turn means that the lighting fixture has been maintained in the On state for 480 minutes, namely 8 hours. If the Off signal is not received, the controller 310 continues to operate the counter, maintaining the last dimming rate (S680, S675, S650, S660). If an Off signal is received in this procedure, the value of the counter given at that time is stored (S690), and the procedure is terminated. The stored value of the control is information necessary for generation of a predicted On/Off time value for the next day.

Meanwhile, if an error occurs in controlling the lighting fixture, the counter 315 of the control device 300 may check the error. For example, when the maximum time for which the lighting fixture is kept turned on is Tmax, if the lighting fixture is kept turned on for a time longer than Tmax by 3 hours or more or power is kept supplied as the lighting fixture is kept turned on for more than 24 hours, a problem may be developed in controlling the lighting fixture. Accordingly, if counting is performed during operation of the counter 315 until the counted value exceeds a certain number, the controller 310 may control the lighting fixture, confirming that the lighting fixture malfunctions. For example, the controller 310 may control the lighting fixture to flicker by increasing or decreasing the dimming level every 5 seconds.

The aforementioned control device controls dimming of one or more outdoor lighting fixtures. To this end, the control device includes a pre-configured dimming base schedule. In one embodiment, the control device includes one dimming base schedule or two or more dimming base schedules. A dimming base schedule may be automatically selected. For example, a dimming base schedule may be selected according to the predicted On/Off time value. For example, if one control device stores two dimming base schedules, and the predicted On/Off time value is less than or equal to 6 hours, a dimming schedule may be generated by applying a dimming base schedule shown in Table 4 below.

TABLE 4

|    | Start_Ratio | End_Ratio | DimmingRate |
|----|-------------|-----------|-------------|
| T1 | 0           | 50        | 100         |
| T2 | 60          | 100       | 70          |

The dimming base schedule of Table 4 is configured differently from the dimming base schedule of Table 1. If the predicted On/Off time value is less than 6 hours, the controlled device may use another dimming base schedule to more efficiently control dimming of light. In this embodiment, different dimming base schedules are employed if the difference between Tmin and Tmax is large.

To summarize the procedure of controlling dimming of FIG. 6, the controller 310 of the control device may operate the counter 315 for counting time according to an On signal for the outdoor lighting fixture (S620, S630), and control dimming of the outdoor lighting fixture according to dimming information of a dimming schedule corresponding to information counted by the counter 315, e.g., time information.

According to the embodiment of FIG. 6, a separate timer for dimming is not necessary, and the counter may be used to store the On/Off time and control dimming of light.

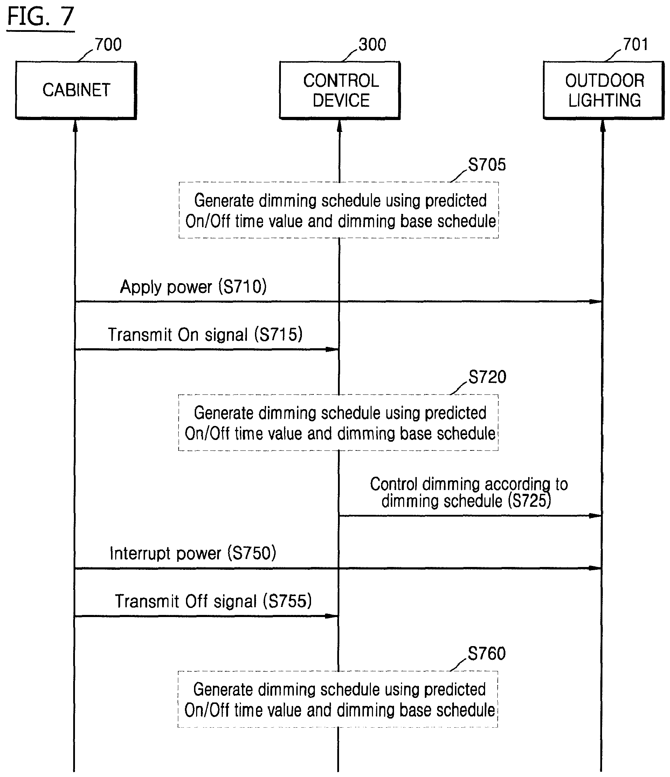

FIG. 7 illustrates interaction among a control device for controlling dimming of a lighting fixture, a lighting fixture and a cabinet for applying an On signal and Off signal to the control device and the lighting fixture according to an embodiment of the present invention.

FIG. 7 involves an embodiment in which the operation of generating a predicted On/Off time value and a dimming schedule is performed as in the operation S705 before an On signal is received for the first time, an embodiment in which the operation of generating a predicted On/Off time value and a dimming schedule is performed as in the operation S720 after an On signal is received, and an embodiment in which the operation of generating a predicted On/Off time value and a dimming schedule is performed as in the operation S760 before the lighting fixture is turned on after an On signal is received for the first time.

A cabinet 700 applies power to outdoor lighting fixtures 701 (S710). In addition, the cabinet 700 transmits an On signal to the control device 300 to notify that power has been applied to the outdoor lighting fixtures 701 simultaneously or sequentially (S715). The control device 300 operates the counter according to the received On signal, and controls dimming of the outdoor lighting fixtures according to a dimming schedule (S730). According to an embodiment, dimming of the outdoor lighting fixtures 701 is controlled using the counter according to a dimming rate appropriate for a specific time interval.

In one embodiment, the dimming schedule used in step S725 may be a previously generated dimming schedule.

Then, the cabinet 700 interrupts the power applied to the outdoor lighting fixtures 701 (S750), and transmits an Off signal to the control device 300 to notify that the lighting fixtures have been turned off (S755). The control device 300 stores the value of the counter in the storage unit according to the Off signal as information about the time for which the lighting fixtures are actually turn on (On/Off time information). In addition, the controller of the control device 300 generates a new dimming schedule using a pre-stored dimming base schedule and the previous On/Off time information to generate a dimming schedule for the next period.

A dimming schedule may be generated at various times. For example, as illustrated in FIG. 7, the control device 300 having received an Off signal calculates a predicted On/Off time value for the next day using the On/Off time information about the very day, and generates a dimming schedule using the stored dimming base schedule. Then, upon receiving an On signal again, the control device 300 may control dimming of the lighting fixtures using the previously generated dimming schedule.

In contrast with FIG. 7, after the control device 300 receives the transmitted On signal (S715), it may generate a predicted On/Off time value and a dimming schedule as in S720. The time at which the control device 300 will generate a dimming schedule may be selected in various steps such as S705, S720 and S760 according to the implementation method, but embodiments of the present invention are not limited thereto.

To summarize the FIG. 7, the storage unit of a control device for controlling dimming of the outdoor lighting fixtures stores one or more pieces of On/Off time information about the outdoor lighting fixtures, and the prediction unit of the control device generates a predicted On/Off time value for the outdoor lighting fixtures using the stored On/Off time information. Then, the controller of the control device generates a dimming schedule by applying the predicted On/Off time value generated by the prediction unit and the dimming base schedule stored in the storage unit (S715, S720, S760).

Then, the controller of the control device controllers dimming of the outdoor lighting fixtures based on the generated dimming schedule (S725).

FIG. 8 illustrates configuration of a control device according to another embodiment of the present invention. The control device illustrated in FIGS. 3 and 7 receives an On signal from an external source. In the example of FIG. 8, the control device automatically controls On/Off of a lighting fixture using a predetermined illumination sensor or photo sensor attached to the lighting fixture.

All elements except an external light sensing unit 820 are identical to the elements illustrated in FIG. 3. The external light sensing unit 820 senses light such as sunlight and allows the controller 310 to check the time to turn on the outdoor lighting fixtures and the time to turn off the outdoor lighting fixtures. That is, the external light sensing unit 820 provides an Off signal to the controller 310 when external light is generated, and provides an On signal to the controller 310 when the external light disappears. When the external light sensing unit 820 transmits an On signal, a power unit 850 applies power to the outdoor lighting fixtures. Similarly, when the external light sensing unit 820 transmits an Off signal, the power unit 850 interrupts power applied to the outdoor lighting fixtures according to the signal.

The example of FIG. 8 may be applied when the control devices are coupled with the respective outdoor lighting fixtures to control the outdoor lighting fixtures as illustrated in part 10 of FIG. 1. Alternatively, if one outdoor lighting fixture controls multiple neighboring outdoor lighting fixtures, the controlled device may be disposed in the one outdoor lighting fixture.

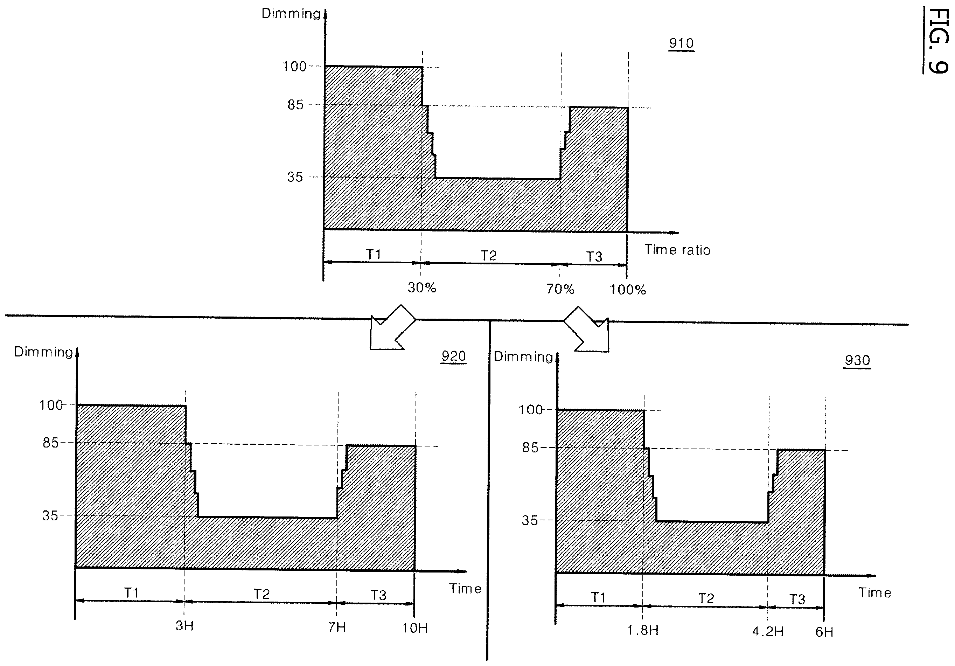

FIG. 9 illustrates generating a dimming schedule by applying a predicted On/Off time value and a dimming base schedule according to an embodiment of the present invention.

Graph 910 visually depicts a dimming base schedule configured in the storage unit of a control device. As discussed above in Table 1, the dimming base schedule may be configured with a time ratio. T1, T2, and T3 are distinguished from each other according to predetermined time ratios. The dimming base schedule of graph 910 is varied according to a specific predicted On/Off time value as in Table 2 above to generate a new dimming schedule. In one embodiment, the generated dimming schedule may be employed only once to control dimming of the lighting fixtures for one day.

The dimming base schedule of graph 910 is transformed into a dimming schedule in proportion to the length of time when the length of Tpredict(x+1) is 10 and 6. Graph 910 depicts a dimming schedule for the dimming base schedule when the length of Tpredict(x+1) is 10H (10 hours). Graph 910 depicts a dimming schedule for the dimming base schedule when the length of Tpredict(x+1) is 6H (6 hours).

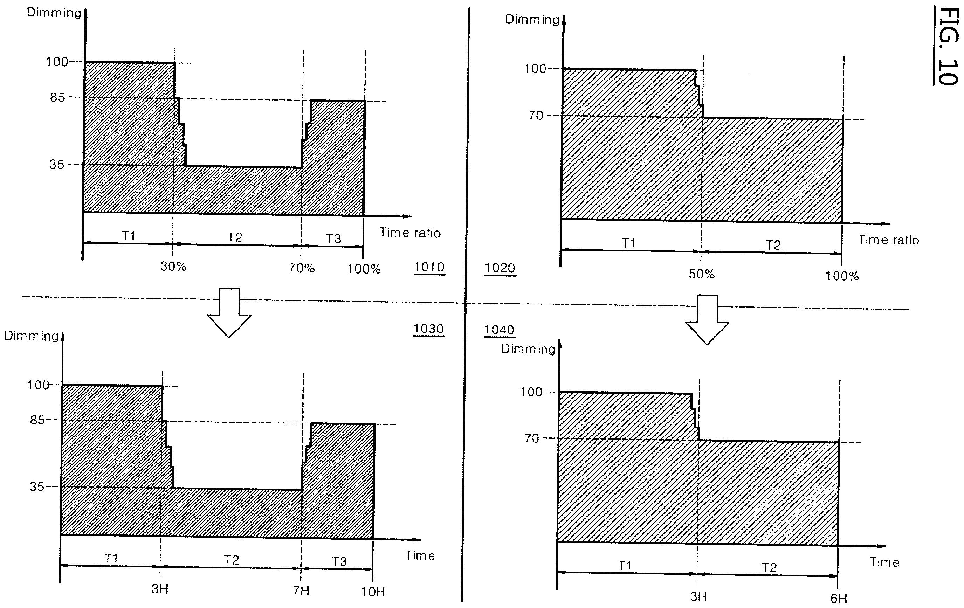

FIG 10 illustrates generating a dimming schedule by applying a predicted On/Off time value and a dimming base schedule according to another embodiment of the present invention. Two or more dimming base schedules may be configured in the control device. The storage unit stores a first based dimming base schedule and a second dimming base schedule. Then, the controller selects one of the first dimming base schedule and the second dimming base schedule according to a predicted On/Off time value to generate a dimming schedule. An embodiment of this operation will be discussed below.

Different dimming base schedules may be provided as shown in Tables 1 and 4, and a specific one of the dimming base schedules may be selected according to the predicted On/Off time value. That is, in FIG 10, a dimming base schedule corresponding to Table 1 and a dimming base schedule corresponding to Table 4 may be stored together in the storage unit of the control device, and a specific one of the dimming basis schedules may be selected according to the predicted On/Off time value.

Referring to FIG. 10, graphs 1010 and 1020 represent two types of dimming base schedules stored in the storage unit. The graphs 1010 and 1020 represent dimming base schedules corresponding to Table 1 and Table 4. If Tpredict(x+1) generated by the prediction unit is greater than 6, for example, if Tpredict(x+1) equals 10 hours, the controller employs the dimming base schedule of graph 1010 to generate a dimming schedule as shown in graph 1030. If Tpredict(x+1) generated by the prediction unit is less than or equal to 6, for example, if Tpredict(x+1) equals 6 hours, the controller employs the dimming base schedule of graph 1020 to generate a dimming schedule as shown in graph 1040.

In the procedure of manufacturing the control device or installing a program or a memory, the dimming base schedule may maintain a fixed value, or the value thereof may change according to an external signal. For example, in the dimming base schedule presented in graphs 910 and 1010 of FIGS. 9 and 10, the dimming rate is lowered for the time corresponding to the time ratio T2. When an external dimming rate adjusting signal instructing the control device to increase or decrease the dimming rate is received, the control device increases or decreases the dimming rate of the lighting fixtures. If such dimming rate adjusting signals are repeatedly input, the controller may count the signals to change the dimming base schedule.

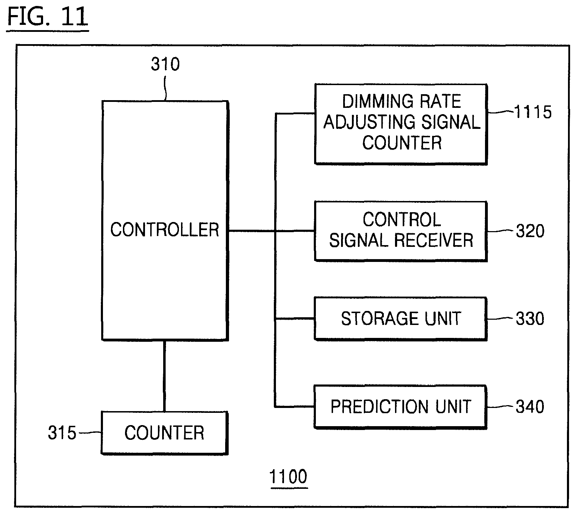

FIG 11 illustrates configuration of a control device according to another embodiment of the present invention.

In FIG 11, a control device 1100 further includes a counter 1115. That is, the control device 1100 additionally includes a counter 1115 for counting dimming rate adjusting signals for increasing or decreasing dimming of the outdoor lighting fixtures in the configuration of FIG. 3. The counter 1115 includes information about a time interval for which the dimming rate has been increased or decreased. The counter 1115 may be limited to store the information only for a certain period. To this end, the control signal receiver 320 may receive a dimming rate adjusting signal.

An embodiment is as shown in Table 5. Table 5 is limited such that only five pieces of information are stored.

TABLE 5

| Date | TimeInterval | DimmingRateSingal |
|------------|--------------|-------------------|
| 2016.06.02 | T2 | +10 |
| 2016.06.03 | T2 | +5 |
| 2016.06.05 | T2 | +10 |
| 2016.06.06 | T2 | +10 |
| 2016.06.07 | T2 | +5 |

TimeInterval denotes an interval for which a dimming rate adjusting signal is generated. DimmingRateSignal denotes a dimming rate adjusting signal and the magnitude of the dimming rate adjustment. For example, the first row of data represents a dimming rate adjusting signal generated on June 2, 2016. T2/+10 denotes that an adjusting signal for increasing the dimming rate by 10 in the interval T2 has been generated. Similarly, according to a dimming rate adjusting signal generated on June 3, 2016 in the second row of data, the data indicates that an adjusting signal for increasing the dimming rate by 5 has been generated. If a dimming rate adjusting signal is not generated, the oldest data is deleted first in order not to unnecessarily change the dimming base schedule. For example, the data may be deleted after 10 days.

The controller 310 confirms that an adjusting signal for increasing the dimming rate in the interval T2 has been generated, according to the information such as Table 5 stored by the counter 1115. Specifically, an average of the values of DimmingRateSignal given for the respective time intervals is estimated and used to change the dimming base schedule when a value greater than a threshold is generated. For example, the threshold is assumed to be 7. The controller 310 confirms that a signal for adjusting the dimming rate whose average is 8 in interval T2 has been generated as a result of estimation of the average of the data previously accumulated five times As a result, the controller 310 may change the dimming base schedule of Table 1 to a dimming base schedule of Table 6 below. The controller 310 may change the dimming rate to 43 in T2 by increasing the dimming rate by 8.

TABLE 6

|    | Start_Ratio | End_Ratio | DimmingRate |
|----|-------------|-----------|-------------|
| T1 | 0           | 30        | 100         |
| T2 | 30          | 70        | **43**      |
| T3 | 70          | 100       | 85          |

The counter 1115 of FIG. 11 may be integrally implemented in the storage unit 330 described above.

In brief, the controller 310 may increase or decrease dimming of the outdoor lighting fixtures according to a dimming rate adjusting signal received by the control signal receiver 320, and change the dimming base schedule to a dimming base schedule as shown in Table 6 using the counter information of the counter 1115. In the case of FIG. 11, a need for change of an initially configured dimming base schedule may be confirmed according to accumulation of dimming rate adjusting signals applied from the outside, and the dimming base schedule may be changed according to the confirmed result.

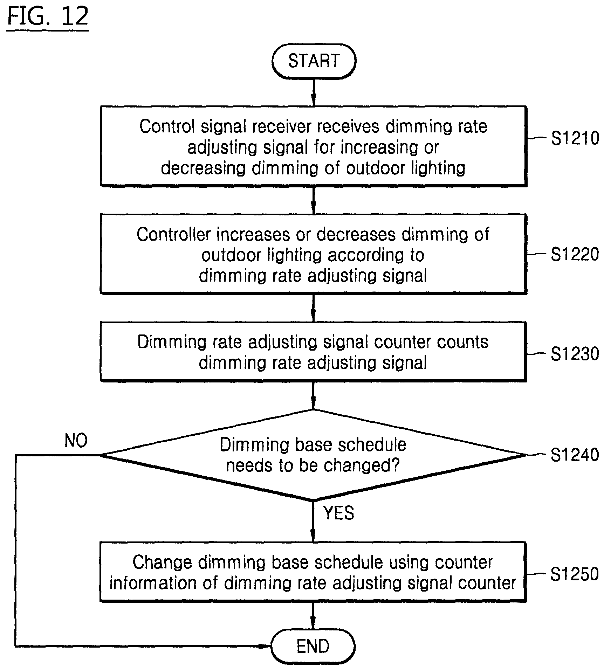

FIG. 12 illustrates a procedure of a control device correcting a dimming base schedule according to an embodiment of the present invention. The control signal receiver receives a dimming rate adjusting signal for increasing or decreasing dimming of the outdoor lighting fixtures (S1210). The controller increases or decreases dimming of the outdoor lighting fixtures according to the received dimming rate adjusting signal (S1220). Then, the dimming rate adjusting signal counter counts the dimming rate adjusting signal. Counting may be performed according to a time interval having the time at which the dimming rate adjusting signal is received and a rate of increase or decrease of the dimming rate. The content value is accumulated every time counting is performed. Based on the accumulated information, the controller checks if the dimming base schedule needs to be changed (S1240). In one embodiment, the checking operation includes checking how many times the signal for increasing or decreasing the dimming rate has been generated in a specific time interval in series. If increase and decrease of the dimming rate occurs repeatedly, the controlled device may be configured to attenuate the influence of the repetition such that the dimming base schedule is not changed.

If change is needed as a result of checking, the controller changes the dimming base schedule using the counter information of the dimming rate adjusting signal counter (S1250). The dimming base schedule may be changed based on the value to which the dimming rate is adjusted by the dimming rate adjusting signal, e.g., the average, mode, or median value of the dimming rates.

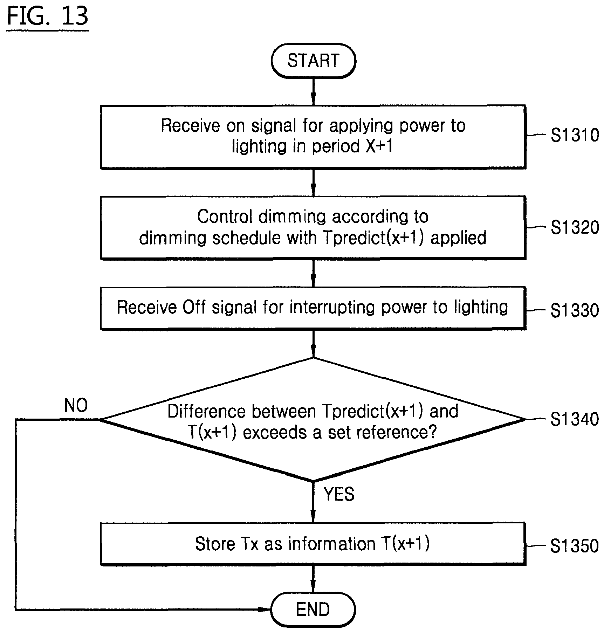

FIG. 13 illustrates an error correction procedure according to an embodiment of the present invention. Tpredict(x+1), which is a predicted On/Off time value for day x+1, is compared with T(x+1), which indicates a time at which the lighting fixtures are actually turned on and off. If the difference between the two values is greater than or equal to a certain time value, it is determined that the lighting fixtures are in an abnormal state, and T(x+1) is prevented from being stored in order to ensure that the time information is not distorted in the procedure of calculating Tpredict(x+1).

When an On signal for applying power to the lighting fixtures is received in a period x+1 (S1310), dimming is controlled according to a dimming schedule to which Tpredict(x+1) is applied (S1320). Then, when an Off signal for interrupting power to the lighting fixtures is received (S1330), T(x+1) is calculated. Then, the difference between Tpredict(x+1) and T(x+1) is calculated. If the difference exceeds a set reference (e.g., 60 minutes) (S1340), it is determined that an abnormal operation is performed due to an environmental error or the like. Thereby, Tx is stored in the storage unit as a value of the On/Off time information about day x+1.

Thereafter, the error on day x+1 is prevented from being involved in calculating Tpredict(x+2). In addition to the difference from an expected time value, if a difference from the value on the previous day exceeds a certain reference, e.g., 60 minutes, it may be determined that abnormal control has occurred due to an environmental cause, and thus the value may be excluded or information about day x may be stored. That is, as another embodiment of S1340, in the case where the difference between T(x+1), which is On/Off time information about day x+1, and T(x), which is On/Off time information about day x, exceeds a set reference, Tx may be stored in the storage unit as a value of the On/Off time information about day x+1.

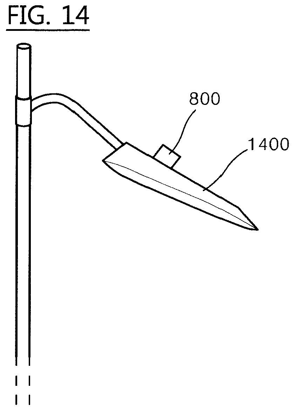

FIG. 14 illustrates a combination of a control device including an external light sensor and an outdoor lighting fixture according to an embodiment of the present invention.

In FIG. 14, a control device 800 including an external light sensor is combined with a lighting fixture 1400. A On/Off signal is provided to the controller such that the external light sensor of the control device 800 senses sunlight and controls On/Off of the lighting fixture 1400.

In conventional cases, the lighting fixture is turned on even if the number of humans or vehicles passing by the lighting fixture is very small. This results in energy waste and damage to people living near the lighting fixture. With the present invention, on the other hand, only On/Off signals are externally provided in controlling the outdoor lighting fixtures. Thereby, energy may be saved by reducing the intensity of light at a certain time according to a dimming schedule calculated in a dimming base schedule.

In particular, with the present invention, brightness of lighting may be lowered to save energy during hours traffic is rare, and may be raised to ensure security and safety during hours when there is a lot of traffic. In addition, when the control time is abnormal, malfunctioning is notified to support maintenance of a relevant device.

In one embodiment of the present invention, scheduled dimming of the lighting outdoor fixtures may be controlled using only a counter and an algorithm without additional devices such as a GPS, a timer requiring real-time processing, a real time clock (RTC) and a backup battery. The duration from the time at which the outdoor lighting fixture is turned on and the time at which the outdoor lighting is turned off may be predicted, and the counter may be operated according to this duration to adjust the dimming rate. Further, in case that an error occurs due to the environment or a problem with the equipment, the error may be corrected according to an abnormality avoidance scheme.

With the present invention, On/Off signals may be provided to one or more outdoor lighting fixtures in a batch, and brightness of the outdoor lighting fixtures may be adjusted according to a dimming schedule. In particular, the control device for controlling the dimming may be disposed in a distribution cabinet in building a system such that the control device controls multiple lighting fixtures together. Thereby, the cost of the system may be reduced.

In addition, when the control device for controlling dimming includes an external light sensing unit such as an illumination sensor or photo sensor for sensing external light, the controlled device may automatically control the lighting fixtures and even dimming of light without a separate On/Off signal.

While all elements are illustrated as being coupled to each other or operated in combination thereof, embodiments of the present invention are not limited thereto. One or more of the elements may be selected and combined to perform an operation within the scope of the present invention. In addition, all the elements may be implemented as independent pieces of hardware, or some or all of them may be selectively combined and implemented as a computer program having a program module for performing some or all functions combined in one or more pieces of hardware. The codes and code segments constituting the computer program may be easily inferred by those skilled in the art. The computer program may be stored in computer readable media, and read and executed by a computer to implement embodiments of the present invention. Examples of the computer readable media include magnetic media, optical media and media including semiconductor devices. The computer program for implementing embodiments of the present invention includes a program module transmitted via an external device in real time.

Preferred embodiments of the present disclosure have been described in detail above. However, it will be apparent to those skilled in the art that various modifications and variations can be made in the present invention. Thus, it is intended that the present invention cover the modifications and variations of this invention provided they come within the scope of the appended claims and their equivalents.

**Claims**

1. A method of controlling outdoor lighting, comprising:

   storing one or more pieces of On/Off time information about the outdoor lighting in a storage unit (330) of a control device (300) for controlling the outdoor lighting;
   generating a predicted On/Off time value for the outdoor lighting by using the stored On/Off time information and by using a prediction unit (340) of the control device;
   generating a dimming schedule by using a controller (310) of the control device (300) and by applying the predicted On/Off time value generated by the prediction unit and a dimming base schedule stored in the storage unit; and
   controlling dimming of the outdoor lighting based on the dimming schedule by using the controller (310) of the control device (300).

2. The method according to claim 1, wherein the dimming base schedule comprises dimming information about each of two or more distinct time intervals.

3. The method according to claim 2, wherein the time intervals are defined by a time ratio within an entire time interval, wherein the generating of the dimming schedule comprises:

   calculating a start time and an end time corresponding to each time ratio of the dimming base schedule; and

generating a dimming schedule comprising the dimming information corresponding to the calculated times, the start time, and the end time.

4. The method according to any one of claims 1 to 3, wherein the generating of the predicted On/Off time value comprises:

extracting K pieces of On/Off time information stored in the storage unit (330);
extracting a time information tendency value from the K pieces of On/Off time information; and
generating the predicted On/Off time value in proportion to increase or decrease of the time information tendency value.

5. The method according to claim any one of claims 1 to 4, wherein the storing of the one or more pieces of On/Off time information comprises:

checking an allowable range of the On/Off time information, setting, when the On/Off time information are outside the range, the On/Off time information to a minimum value or maximum value, and storing the set value in the storage unit (330).

6. The method according to claim any one of claims 1 to 5, wherein the controlling of the dimming comprises:

the control of the control device (300) operating a counter (315) for counting time according to an On signal for the outdoor lighting; and
controlling dimming of the outdoor lighting according to the dimming information of the dimming schedule corresponding to information counted by the counter (315).

7. The method according to claim any one of claims 1 to 6, wherein the generating of the dimming schedule comprises:

selecting one dimming base schedule corresponding to the predicted On/Off time value between a first dimming base schedule and a second dimming base schedule and generating the dimming schedule.

8. The method according to any one of claims claim 1 to 7, further comprising:

using a control signal receiver (320) of the control device (300) for receiving a dimming rate adjusting signal for increasing or decreasing dimming of the outdoor lighting;
using the controller (310) for increasing or decreasing dimming of the outdoor lighting according to the received dimming rate adjusting signal;
using a dimming rate adjusting signal counter for counting dimming rate adjusting signals; and
using the controller (310) for changing the dimming base schedule using counter information of the dimming rate adjusting signal counter.

9. A control device for controlling outdoor lighting, comprising:

a storage unit (330) configured to store one or more pieces of On/Off time information about the outdoor lighting, a dimming base schedule and a dimming schedule;
a prediction unit (340) configured to generate a predicted On/Off time value for the outdoor lighting by using the stored On/Off time information; and
a controller (310) configured to generate a dimming schedule by applying the predicted On/Off time value generated by the prediction unit and a dimming base schedule stored in the storage unit and for controlling dimming of the outdoor lighting based on the dimming schedule.

10. The control device according to claim 9, further comprising:

a control signal receiver (320) configured to receivean On signal for notifying that power has been applied to a fixture of the outdoor lighting and an Off signal for notifying that power the fixture of the outdoor lighting has been interrupted.

11. The control device according to claims 9 or 10, further comprising:

a power unit (850) configured to apply or interrupt power to a fixture of the outdoor lighting; and
an external light sensing unit (820) configured to sense external light at a location of the fixture of the outdoor lighting and transmitting an On signal or Off signal for the fixture of the outdoor lighting to the controller (310) and the power unit (850).

**12.** The control device according to any one of claims 9 to 11, wherein the dimming base schedule comprises dimming information about each of two or more distinct time intervals.

**13.** The control device according to claim 12, wherein the time intervals are defined by a time ratio within an entire time interval,
wherein the controller (310) is configured to calculate a start time and an end time corresponding to each time ratio of the dimming base schedule, and generates a dimming schedule comprising the dimming information corresponding to the calculated times, the start time, and the end time.

**14.** The control device according to any one of claims 9 to 13, wherein the prediction unit (340) is configured to extract K pieces of On/Off time information stored in the storage unit (330); is configured to extract a time information tendency value from the K pieces of On/Off time information; and is configured to generate the predicted On/Off time value in proportion to increase or decrease of the time information tendency value.

**15.** The control device according to any one of claims 9 to 14, further comprising:

a counter (315) configured to count time,

wherein the controller (310) is configured to operate the counter (315) according to an On signal for the outdoor lighting, and is configured to control dimming of the outdoor lighting according to dimming information of the dimming schedule corresponding to information counted by the counter (315).


**Amended claims in accordance with Rule 137(2) EPC.**

**1.** A method of controlling outdoor lighting, comprising:

storing one or more pieces of On/Off time information about the outdoor lighting in a storage unit (330) of a control device (300) for controlling the outdoor lighting;
generating a predicted On/Off time value for the outdoor lighting by using the stored On/Off time information and by using a prediction unit (340) of the control device;
generating a dimming schedule by using a controller (310) of the control device (300) and by applying the predicted On/Off time value generated by the prediction unit and a dimming base schedule stored in the storage unit; and
controlling dimming of the outdoor lighting based on the dimming schedule by using the controller (310) of the control device (300),
wherein the generating of the predicted On/Off time value comprises:

extracting at least two consecutive pieces of On/Off time information stored in the storage unit (330);
calculating a time information tendency value from the extracted pieces of On/Off time information; and
generating the predicted On/Off time value in proportion to increased value or decreased value of the time information tendency value.

**2.** The method according to claim 1, wherein the dimming base schedule comprises dimming information about each of two or more distinct time intervals.

**3.** The method according to claim 2, wherein the time intervals are defined by a time ratio within an entire time interval, wherein the generating of the dimming schedule comprises:

calculating a start time and an end time corresponding to each time ratio of the dimming base schedule; and
generating a dimming schedule comprising the dimming information corresponding to the calculated times, the start time, and the end time.

**4.** The method according to claim any one of claims 1 to 3, wherein the storing of the one or more pieces of On/Off time information comprises:

checking an allowable range of the On/Off time information, setting, when the On/Off time information are outside the range, the On/Off time information to a minimum value or maximum value, and storing the set value in the storage unit (330).

**5.** The method according to claim any one of claims 1 to 4, wherein the controlling of the dimming comprises:

the control of the control device (300) operating a counter (315) for counting time according to an On signal for the outdoor lighting; and
controlling dimming of the outdoor lighting according to the dimming information of the dimming schedule corresponding to information counted by the counter (315).

**6.** The method according to claim any one of claims 1 to 5, wherein the generating of the dimming schedule comprises:

selecting one dimming base schedule corresponding to the predicted On/Off time value between a first dimming base schedule and a second dimming base schedule and generating the dimming schedule.

**7.** The method according to any one of claims claim 1 to 6, further comprising:

using a control signal receiver (320) of the control device (300) for receiving a dimming rate adjusting signal for increasing or decreasing dimming of the outdoor lighting;
using the controller (310) for increasing or decreasing dimming of the outdoor lighting according to the received dimming rate adjusting signal;
using a dimming rate adjusting signal counter for counting dimming rate adjusting signals; and
using the controller (310) for changing the dimming base schedule using counter information of the dimming rate adjusting signal counter.

**8.** A control device for controlling outdoor lighting, comprising:

a storage unit (330) configured to store one or more pieces of On/Off time information about the outdoor lighting, a dimming base schedule and a dimming schedule;
a prediction unit (340) configured to generate a predicted On/Off time value for the outdoor lighting by using the stored On/Off time information; and
a controller (310) configured to generate a dimming schedule by applying the predicted On/Off time value generated by the prediction unit and a dimming base schedule stored in the storage unit and for controlling dimming of the outdoor lighting based on the dimming schedule,
wherein the prediction unit (340) is configured to extract at least two consecutive pieces of On/Off time information stored in the storage unit (330);
is configured to calculate a time information tendency value from the extracted pieces of On/Off time information; and
is configured to generate the predicted On/Off time value in proportion to increased value or decreased value of the time information tendency value.

**9.** The control device according to claim 8, further comprising:

a control signal receiver (320) configured to receive an On signal for notifying that power has been applied to a fixture of the outdoor lighting and an Off signal for notifying that power the fixture of the outdoor lighting has been interrupted.

**10.** The control device according to claims 8 or 9, further comprising:

a power unit (850) configured to apply or interrupt power to a fixture of the outdoor lighting; and
an external light sensing unit (820) configured to sense external light at a location of the fixture of the outdoor lighting and transmitting an On signal or Off signal for the fixture of the outdoor lighting to the controller (310) and the power unit (850).

**11.** The control device according to any one of claims 8 to 10, wherein the dimming base schedule comprises dimming information about each of two or more distinct time intervals.

**12.** The control device according to claim 11, wherein the time intervals are defined by a time ratio within an entire time interval,
wherein the controller (310) is configured to calculate a start time and an end time corresponding to each time ratio of the dimming base schedule, and generates a dimming schedule comprising the dimming information corresponding to the calculated times, the start time, and the end time.

**13.** The control device according to any one of claims 8 to 12, further comprising:

a counter (315) configured to count time,
wherein the controller (310) is configured to operate the counter (315) according to an On signal for the outdoor lighting, and is configured to control dimming of the outdoor lighting according to dimming information of the dimming schedule corresponding to information counted by the counter (315).

FIG. 1

EP 3 264 865 A1

## FIG. 2

Dimming

| T1 | T2 | T3 |

## FIG. 3

310

CONTROLLER

CONTROL SIGNAL RECEIVER ~320

STORAGE UNIT ~330

PREDICTION UNIT ~340

315~ COUNTER

300

## FIG. 4

START

Set $T_{min}$ and $T_{max}$ according to the latitude of installation location — S410

$T_x < T_{min}$ — S420

YES → $T_x = T_{min}$ — S425

NO

$T_x > T_{max}$ — S430

YES → $T_x = T_{max}$ — S435

NO

Calculate direction indicating tendency of $T_x$ and check if direction >0 — S440

NO → S450— $-5 \leq T_{predict(x+1)} - T_x \leq 0$

YES → $0 \leq T_{predict(x+1)} - T_x \leq 5$ —S460

Calculate predicted On/Off time value — S470

END

## FIG. 5

```
        ( START )
            |
            v
+-------------------------------+
|   Generate dimming schedule by |
| applying predicted On/Off time |---- S510
|    value to dimming base       |
|          schedule              |
+-------------------------------+
            |
            v
   NO      / Dimming schedule \
  <--------<  needs to be      >---- S520
  |         \  corrected?     /
  |              |
  |             YES
  |              v
  |   +-------------------------+
  |   | Correct dimming schedule |---- S530
  |   +-------------------------+
  |              |
  |              v
  |   +------------------------------------+
  +-->| Control lighting according to       |---- S540
      |         dimming schedule            |
      +------------------------------------+
            |
            v
         ( END )
```

## FIG. 6

```
                    ( START )
                        │
                        ▼
┌────────────────────────────────────────┐
│ Store predicted On/Off time value in counter │──S610
└────────────────────────────────────────┘
                        │
                        ▼
┌────────────────────────────────────────┐
│   Control signal receiver receives On signal  │──S620
└────────────────────────────────────────┘
                        │
                        ▼
┌────────────────────────────────────────┐
│             Initialize counter              │──S630
└────────────────────────────────────────┘
                        │
                        ▼
┌────────────────────────────────────────┐
│   Adjust dimming of lighting according to  │──S640
│   dimming rate having value of counter as  │
│ Start_Time in dimming schedule in storage unit │
└────────────────────────────────────────┘
                        │
                        ▼
┌────────────────────────────────────────┐
│             Operate counter             │──S650
└────────────────────────────────────────┘
                        │
                        ▼
        YES      ╱ Off signal received? ╲ ──S660
    ◄────────────◄                      ►
                 ╲                      ╱
                        │ NO
                        ▼
                 ╱ Value of counter has ╲ ──S670   NO   ┌──────────────────┐
                 ◄  reached End_Time?   ►────────────►│ Maintain dimming │──S675
                 ╲                      ╱             └──────────────────┘
                        │ YES
                        ▼
                 ╱ Start_Time corresponding to ╲ ──S680   NO
                 ◄   value of counter present?  ►──────────►
                 ╲                              ╱
                        │ YES
                        ▼
┌────────────────────────────────────────┐
│            Store value of counter          │──S690
└────────────────────────────────────────┘
                        │
                        ▼
                     ( END )
```

## FIG. 7

700
CABINET

300
CONTROL
DEVICE

701
OUTDOOR
LIGHTING

S705
Generate dimming schedule using predicted
On/Off time value and dimming base schedule

Apply power (S710)

Transmit On signal (S715)

S720
Generate dimming schedule using predicted
On/Off time value and dimming base schedule

Control dimming according to
dimming schedule (S725)

Interrupt power (S750)

Transmit Off signal (S755)

S760
Generate dimming schedule using predicted
On/Off time value and dimming base schedule

FIG. 8

## FIG. 9

910

920

930

## FIG. 10

## FIG. 11

FIG. 12

START

Control signal receiver receives dimming rate
adjusting signal for increasing or
decreasing dimming of outdoor lighting — S1210

Controller increases or decreases dimming of
outdoor lighting according to
dimming rate adjusting signal — S1220

Dimming rate adjusting signal counter counts
dimming rate adjusting signal — S1230

Dimming base schedule
needs to be changed? — S1240

NO

YES

Change dimming base schedule using counter
information of dimming rate adjusting signal counter — S1250

END

30

## FIG. 13

START

Receive on signal for applying power to
lighting in period X+1 — S1310

Control dimming according to
dimming schedule with Tpredict(x+1) applied — S1320

Receive Off signal for interrupting power to lighting — S1330

Difference between Tpredict(x+1) and
T(x+1) exceeds a set reference? — S1340

NO

YES

Store Tx as information T(x+1) — S1350

END

FIG. 14

800

1400

Europäisches
Patentamt

European
Patent Office

Office européen
des brevets

## EUROPEAN SEARCH REPORT

**Application Number**

EP 16 20 0572

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | DE 10 2011 107090 A1 (SITECO BELEUCHTUNGSTECH GMBH [DE]) 17 January 2013 (2013-01-17) * paragraphs [0001] - [0008], [0012], [0014] - [0017], [0022], [0024], [0029], [0035] - [3725] * | 1-3,5-7, 9-13,15<br>8<br>4,14 | INV.<br>H05B37/02<br>F21S8/08 |
| X<br>A | US 2010/295454 A1 (REED WILLIAM G [US]) 25 November 2010 (2010-11-25) * figures 3, 6A-6D, 7-13 * * paragraph [0057] - paragraph [0128] * | 1-3,5-7, 9-13,15<br>4,14 | |
| X<br>Y | WO 2009/018853 A1 (OSRAM GMBH [DE]; MUEHLSCHLEGEL JOACHIM [DE]) 12 February 2009 (2009-02-12) * figure 1 * * paragraphs [0008], [0012] - [0024], [0045], [0046] * | 1-3, 6-10,12, 13,15<br>8 | |
| A | FR 2 847 760 A1 (APP ET BOBINAGE ELECTR DU LIMO [FR]) 28 May 2004 (2004-05-28) * page 1, line 27 - page 4, line 4 * | 1,4,5,9, 14 | TECHNICAL FIELDS SEARCHED (IPC)<br><br>H05B<br>F21S |

The present search report has been drawn up for all claims

| Place of search | Date of completion of the search | Examiner |
|---|---|---|
| Munich | 6 June 2017 | Schwarzenberger, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 20 0572

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2017

| Patent document cited in search report | Publication date | Patent family member(s) | | Publication date |
|---|---|---|---|---|
| DE 102011107090 A1 | 17-01-2013 | NONE | | |
| US 2010295454 A1 | 25-11-2010 | US | 2010295454 A1 | 25-11-2010 |
| | | US | 2010295455 A1 | 25-11-2010 |
| | | US | 2013307418 A1 | 21-11-2013 |
| | | US | 2014320027 A1 | 30-10-2014 |
| | | WO | 2010135577 A2 | 25-11-2010 |
| | | WO | 2010135582 A2 | 25-11-2010 |
| WO 2009018853 A1 | 12-02-2009 | AU | 2007357498 A1 | 12-02-2009 |
| | | CN | 101682975 A | 24-03-2010 |
| | | EP | 2172086 A1 | 07-04-2010 |
| | | KR | 20100047307 A | 07-05-2010 |
| | | TW | 200915926 A | 01-04-2009 |
| | | US | 2011234116 A1 | 29-09-2011 |
| | | WO | 2009018853 A1 | 12-02-2009 |
| FR 2847760 A1 | 28-05-2004 | NONE | | |

EPO FORM P0459

For more details about this annex : see Official Journal of the European Patent Office, No. 12/82